(19) **Europäisches Patentamt**

**European Patent Office**

**Office européen des brevets**

(11) **EP 1 573 664 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(21) Anmeldenummer: **03799415.9**

(22) Anmeldetag: **06.11.2003**

(51) Int Cl.:
**G06K 19/07** *(2006.01)* **G01R 19/00** *(2006.01)*

(86) Internationale Anmeldenummer:
**PCT/EP2003/012637**

(87) Internationale Veröffentlichungsnummer:
**WO 2004/055722 (01.07.2004 Gazette 2004/27)**

(54) **VORRICHTUNG ZUR ERMITTLUNG DES ENERGIEZUSTANDES EINES ENERGIESPEICHERS EINES MOBILEN DATENTRÄGERS**

DEVICE FOR DETERMINING THE ENERGY LEVEL OF AN ENERGY STORE OF A MOBILE DATA CARRIER

DISPOSITIF PERMETTANT DE DETERMINER LE NIVEAU D'ENERGIE D'UN ACCUMULATEUR D'ENERGIE D'UN SUPPORT DE DONNEES MOBILE

(84) Benannte Vertragsstaaten:
**AT BE BG CH CY CZ DE DK EE ES FI FR GB GR HU IE IT LI LU MC NL PT RO SE SI SK TR**

(30) Priorität: **18.12.2002 DE 10259384**

(43) Veröffentlichungstag der Anmeldung:
**14.09.2005 Patentblatt 2005/37**

(73) Patentinhaber: **SIEMENS AKTIENGESELLSCHAFT**
**80333 München (DE)**

(72) Erfinder: **CUYLEN, Michael**
**90513 Zirndorf (DE)**

(56) Entgegenhaltungen:
**EP-B- 0 467 497          US-A- 4 866 389**
**US-A- 5 099 209**

EP 1 573 664 B1

**Beschreibung**

Vorrichtung zur Ermittlung des Ermittlung des Ernergiezustandes eines Energiespeichers eines mobilen Datenträgers

Die Erfindung betrifft eine Vorrichtung zur Ermittlung des Energiezustandes eines Energiespeichers eines mobilen Datenträgers. Eine derartige Vorrichtung kann beispielsweise im Zusammenhang mit kontaktlosen Identifikationssystemen verwendet werden.

Kontaktlose Identifikationssysteme arbeiten auf Basis von berührungslosen Übertragungstechniken. Diese können beruhen auf einer elektromagnetischen Übertragung oder einer Übertragung mittels Licht-, Infrarot- oder Ultraschallsignalen. Systeme dieser Art werden beispielsweise zur Identifikation von Personen oder von bewegten Gütern wie beispielsweise Transportmittel eingesetzt. Die notwendigen Daten werden dazu von einem Sende-/Empfangsgerät über eine berührungslose Datenübertragungsstrecke übertragen, beispielsweise über eine Luftschnittstelle zu einem Datenträger und zurück. Dabei gestattet die berührungslose Identtechnik auch eine Erfassung von Daten während einer Vorbeibewegung des Datenträgers am Sende-/Empfangsgerät, ohne dass der Datenträger in ein Schreib-/Lesegerät eingeschoben oder durch dieses gezogen werden muss. Datenträger dieser Art werden beispielsweise als Fahrkarten mit einem elektronisch nachladbaren Guthaben verwendet, wobei der jeweilige Betrag bei einer Benutzung des Verkehrsmittels automatisch abgebucht wird.

Aus der DE 691 23 887 T2 ist eine IC-Karte bekannt, welche einen Spannungsabfall der Einbaubatterie detektieren kann. Die IC-Karte weist dazu u.a. eine Datenübertragungs-/Empfangseinrichtung, eine Datenverarbeitungseinrichtung, eine Ladeeinrichtung, eine Vergleichseinrichtung sowie eine Zeitmesseinrichtung auf.

Aus der DE 100 54 970 A1 ist ein Verfahren zur Steuerung der Lade- und Entladephasen eines Stützkondensators bekannt. In einer Schaltungsanordnung wird eine Konstantstromquelle durch eine Stromspiegelschaltung gebildet und über einen Komparator die Spannung am Stützkondensator mit einer Band-Gap-Referenz verglichen.

Damit die Datenträger zeitlich unbegrenzt eingesetzt werden können, wird bei diesen auf eine Integration von chemischen Energiespeichern, wie beispielsweise Batterien, verzichtet. Die notwendige elektrische Energie der Datenträger wird daher extern, d. h. von einem vom Sende-/Empfangsgerät stammenden Energieträger, beispielsweise einem elektrischen oder magnetischen Feld, kontaktlos entnommen. Zur Kommunikation des Sende-/Empfangsgerätes mit derartigen Datenträgern sind daher geeignete Übertragungs- und Codierungsverfahren notwendig. Zum einen sind zur Übertragung von Daten in der Regel nur bestimmte Frequenzbänder freigegeben, beispielweise die ISM-Frequenzbänder (Industrial, Scientific & Medical) für industrielle, wissenschaftliche und medizinische Anwendungen. Mögliche nationale Funkvorschriften können unter anderem die einzuhaltenden Modulationsbandbreiten sowie die Feldstärken festlegen. Zum anderen müssen die Übertragungs- und Codierungsverfahren auch eine energetische Versorgung der Elektronik auf dem Datenträger sicherstellen.

Solche Verfahren sind in der Norm ISO/IEC 15693 Part 2 "Air Interface and Initialization" beschrieben. Verfahren dieser Art erlauben eine durchgehende Energieversorgung der Datenträgerelektronik, die von der Energie der angelegten Trägerfrequenz des Sende-/Empfangsgerätes stammt. Dabei wird die Trägerfrequenz zur Modulation der zu sendenden Daten nur für ein maximales Zeitintervall ausgeschaltet. Innerhalb dieses Zeitintervalls muss ein zuvor durch das elektrische oder magnetische Feld aufgeladener Energiespeicher die Energieversorgung der Datenträgerelektronik vornehmen können. Als temporärer Energiespeicher auf dem Datenträger wird im Allgemeinen ein Kondensator verwendet. Dabei erfolgt eine Codierung der Daten durch Wegschalten des Trägers an festgelegten Positionen innerhalb eines zyklischen Zeitrasters. Die Norm legt weiterhin unter Berücksichtigung des oben genannten maximalen Zeitintervalls die Feldstärkegrenzwerte für die durch Modulation hervorgerufenen Seitenbänder bei einer bestimmten Trägerfrequenz fest. Für die Höhe der Seitenbandmodulation ist zum einen das Zeitverhältnis von eingeschalteter zu ausgeschalteter Trägerfrequenz maßgeblich. Daneben tragen weiterhin aufeinanderfolgende Wechsel von eingeschalteter zu ausgeschalteter Trägerfrequenz zu einer deutlichen Erhöhung der Seitenbandmodulation bei. Die Notwendigkeit, die in der Norm festgelegten Seitenbandgrenzen einzuhalten, führt zu einer maximal möglichen Datenrate.

Eine Datenübertragung bei berührungslosen Übertragungstechniken kann jedoch durch eine unzureichende Kopplung in unerwünschter Weise beeinflusst werden. Eine derartige unzureichende Kopplung kann beispielsweise dann vorliegen, wenn sich ein mobiler Datenträger sehr schnell durch ein Feld bewegt, oder auch an den Feldgrenzen, an denen die Energieübertragung gering ist.

Zu Nachteilen kann dies beispielsweise dann führen, wenn ein Schreibvorgang zu einem Schreib-/Lesespeicher eines mobilen Datenträgers beim Vorliegen einer ausreichenden Kopplung zwischen dem mobilen Datenträger und dem stationären Schreib-/Lesegerät begonnen wurde, jedoch auf Grund einer relativen Bewegung des mobilen Datenträgers zum stationären Schreib-/Lesegerät ein ausreichendes Nachladen des Energiespeichers des mobilen Datenträgers nicht vorgenommen werden kann. Dies kann zur Folge haben, dass die für den Schreibvorgang erforderliche Energie im mobilen Datenträger nicht zur Verfügung steht, so dass der Schreibvorgang nicht korrekt beendet werden kann.

Die Aufgabe der Erfindung besteht darin, einen Weg aufzuzeigen, wie die vorstehend beschriebenen Nachteile vermieden werden können.

Diese Aufgabe wird durch eine Vorrichtung mit den im Anspruch 1 angegebenen Merkmalen gelöst. Vorteilhafte Ausgestaltungen und Weiterbildungen der Erfindung ergeben sich aus den abhängigen Ansprüchen 2 - 7. Der Anspruch 8 betrifft die Verwendung der erfindungsgemäßen Vorrichtung in einem mobilen Datenträger. Der Anspruch 9 betriff die Verwendung der erfindungsgemäßen Vorrichtung in einem Identifikationssystem.

Die Vorteile der Erfindung bestehen insbesondere darin, dass dem Anwender zu jedem gewünschten Zeitpunkt Auskünfte über den Energiezustand des mobilen Datenträgers zur Verfügung gestellt werden können. Es besteht somit die Möglichkeit, einen unzureichenden Energiezustand des Energiespeichers des mobilen Datenträgers zu erkennen und einen auf Grund des unzureichenden Energiezustandes unvollständigen oder fehlerhaften Datenaustausch nochmals korrekt und vollständig durchzuführen. Diese Möglichkeit ist mit nur geringem Zusatzaufwand auf dem mobilen Datenträger realisierbar. Eine Vorrichtung gemäß der Erfindung liefert schnelle und gute Aussagen über den Energiezustand des Energiespeichers des mobilen Datenträgers. Ein weiterer Vorteil der Erfindung besteht in einer nahezu vollständigen Unabhängigkeit der erhaltenen Aussagen von Toleranzen beteiligter Schaltungselemente.

Weitere vorteilhafte Eigenschaften der Erfindung ergeben sich aus deren beispielhaften Erläuterung anhand der Figuren.

Es zeigt

Figur 1 ein Blockschaltbild, in welchem die zum Verständnis der Erfindung wesentlichen Bestandteile eines Identifikationssystems dargestellt sind,

Figur 2 ein Schaltbild, in welchem eine Vorrichtung zur Ermittlung des Energiezustandes eines Energiespeichers eines mobilen Datenträgers dargestellt ist,

Figur 3 ein Diagramm zur Veranschaulichung verschiedener Spannungen,

Figur 4 ein Diagramm zur Veranschaulichung des Spannungsverlaufs der am Kondensator 7 von Figur 2 anliegenden Spannung U1 in Abhängigkeit vom Abstand zwischen dem Schreib-/Lesegerät und dem mobilen Datenträger,

Figur 5 ein Diagramm zur Veranschaulichung der Lage zweier Messzeitpunkte,

Figur 6 ein Diagramm zur Veranschaulichung der gemessenen Ladezeiten bei einer Messung zum ersten Messzeitpunkt, zu welchem eine vergleichsweise kleine Spannung am Kondensator 7 anliegt, und

Figur 7 ein Diagramm zur Veranschaulichung der gemessenen Ladezeiten bei einer Messung zum zweiten Messzeitpunkt, zu welchem eine vergleichsweise hohe Spannung am Kondensator 7 anliegt.

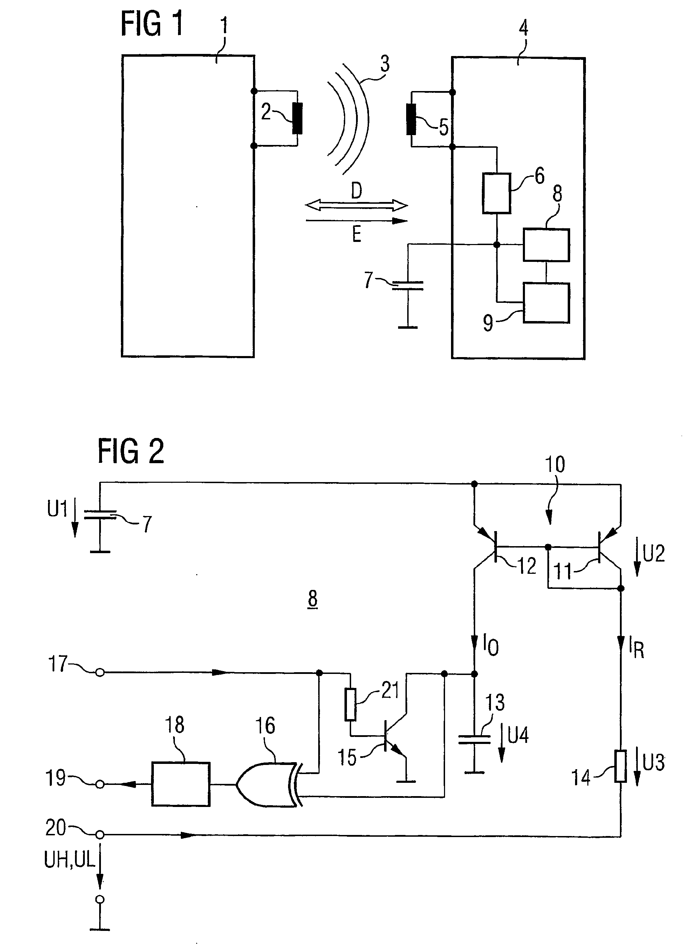

Die Figur 1 zeigt ein Blockschaltbild, in welchem die zum Verständnis der Erfindung wesentlichen Bestandteile eines Identifikationssystems dargestellt sind.

Das dargestellte System weist ein Schreib-/Lesegerät 1 und einen mobilen Datenträger 4 auf. Zwischen dem Schreib-/Lesegerät 1 und dem mobilen Datenträger 4 erfolgt über eine Luftübertragungsstrecke 3 ein bidirektionaler Austausch von Daten D. Weiterhin wird vom Schreib-/Lesegerät über die Luftübertragungsstrecke 3 auch Energie E zum mobilen Datenträger 4 übertragen, wobei diese Übertragung von Energie in Zeitintervallen vorgenommen wird, in denen kein Austausch von Daten erfolgt. Die Übertragung von Daten und Energie erfolgt nach dem Prinzip der induktiven Kopplung. Zu diesem Zweck ist das Schreib-/Lesegerät 1 mit einer Spule 2 und der mobile Datenträger 4 mit einer Spule 5 versehen.

Im mobilen Datenträger 4 wird die übertragene Energie über einen Gleichrichter 6 einem als Kondensator realisierten Energiespeicher zugeleitet. Die am Kondensator 7 anliegende unstabilisierte Gleichspannung wird einem Spannungsstabilisator 9 zugeleitet, an dessen Ausgang die zur Versorgung des mobilen Datenträgers 4 benötigte stabilisierte Gleichspannung zur Verfügung gestellt wird.

Weiterhin ist der Kondensator 7 mit einer Vorrichtung 8 verbunden, die zur Ermittlung des Energiezustandes des Kondensators 7 vorgesehen ist.

Die Figur 2 zeigt ein Schaltbild, in welchem die Vorrichtung 8 zur Ermittlung des Energiezustandes des Kondensators 7 des mobilen Datenträgers 4 detaillierter dargestellt ist. Die Vorrichtung 8 weist einen Transistoren 11 und 12 enthaltenden Stromspiegel auf. Dieser hat zwei zueinander parallele Pfade. Im ersten Pfad, in welchem sich der Transistor 12 befindet, fließt ein Strom $I_0$. Im zweiten Pfad, in dem der Transistor 11 angeordnet ist, fließt ein Strom $I_R$. Im zweiten Pfad ist weiterhin ein an den Transistor 11 angeschlossener Ohmscher Widerstand 14 vorgesehen, dessen anderer Anschluss mit einem HIGH-/LOW-Pegel-Signaleingang 20 der Vorrichtung 8 verbunden ist. Über diesen Eingang 20 wird der Vorrichtung 8 von einer nicht dargestellten Logik entweder ein HIGH-Pegelsignal oder ein LOW-Pegelsignal zugeführt.

Im ersten Pfad ist an den Transistor 12 ein Hilfskondensator 13 angeschlossen, dessen anderer Anschluss an Masse liegt. Der masseferne Anschluss des Hilfskondensators 13 ist mit einem Eingang eines EX-OR-Gliedes 16 und mit dem Kollektor eines npn-Transistors 15 verbunden. Der Emitter des Transistors 15 liegt auf Masse. Die Basis des Transistors 15 ist über einen Ohmschen Widerstand 21 mit einem Eingang 17 der Vorrichtung 8 verbunden. Beim Eingang 17 handelt es sich um einen Messzeiteingang, über welchen der Vorrichtung 8 Signale zugeführt werden, die Messzeitintervalle definieren. Diese Messzeitsignale werden in der bereits genannten, nicht gezeichneten Logik generiert, welche auch die am HIGH-LOW-Pegel-Signaleingang 20 zur Verfügung gestellten Signale liefert. In dieser Logik liegen Informationen über den Systemtakt vor, die zur Generierung der den Eingängen 17 und 20 zugeführten Signale benötigt werden. Die am Eingang 17 anliegenden Messzeitsignale werden dem anderen Eingang des EX-OR-Gliedes 16 und über den Ohmschen Widerstand 21 der Basis des npn-Transistors 15 zugeführt.

Die Ausgangssignale des EX-OR-Gliedes 16, bei welchen es sich um Informationen über Ladezeiten des Hilfskondensators 13 handelt, werden einer Auswertelogik 18 zugeleitet. Diese berechnet aus den genannten Ladezeiten eine Größe in Form eines Zahlenwertes, welcher Auskunft über den Energiezustand des Kondensators 7 gibt. Insbesondere enthält dieser Zahlenwert Angaben über das Verhältnis der am Kondensator 7 anliegenden, unstabilisierten Versorgungsspannung zu der vom mobilen Datenträger als Versorgungsspannung benötigten stabilisierten Gleichspannung. Letztere beträgt beispielsweise 3 V und ist die Betriebsspannung eines Chips des mobilen Datenträgers. Anhand der am Ausgang der Auswertelogik 18 vorliegenden Information kann insbesondere eine Aussage darüber getroffen werden, wie groß die Energiereserve des mobilen Datenträgers zum Zeitpunkt der Messung ist.

Nachfolgend wird die Funktionsweise der in der Figur 2 gezeigten Vorrichtung näher erläutert.

) Bei einem Stromspiegel, wie er in der Figur 2 durch die Transistoren 11 und 12 realisiert ist, gilt folgende allgemeine Beziehung:

$$\frac{I_0}{I_R} = 1 - \frac{2}{\beta + 2} \approx 1 .$$

Weiterhin gilt für die Spannung U eines Kondensators C, welcher mit einem konstanten Strom $I_0$ aufgeladen wird, folgende Beziehung:

$$U = I_0 \bullet t/C.$$

Aus dieser Beziehung folgt durch Umrechnung:

$$t = U \bullet C/I_0. \qquad (\text{Gleichung 1})$$

Diese Beziehungen gelten auch für den Aufladevorgang des Hilfskondensators 13 und werden bei der erfindungsgemäßen Ermittlung des Energiezustandes des Kondensators 7 berücksichtigt.

Bezeichnet man gemäß der Figur 2 die am Kondensator 7 abfallende Spannung mit U1, die am Transistor 11 abfallende Spannung mit U2, die am Widerstand 14 abfallende Spannung mit U3 und die am Eingang 20 zur Verfügung gestellten Spannungen mit UH bzw. UL, dann gilt:
U3 = U1- U2 - UL, falls UL am Eingang 20 anliegt, und
U3 = U1 - U2 - UH, falls UH am Eingang 20 anliegt.

Falls UL = 0, dann folgt:

$$U3 = U1 - U2.$$

Für den Strom $I_R$ gilt bei einem Anliegen von UH am Eingang 20 folgende Beziehung:

$$I_{R(UH)} = \frac{U3 - UH}{R_{14}} .$$

Bei einem Anliegen von UL am Eingang 20 gilt für den Strom $I_R$:

$$I_{R(UL)} = \frac{U3 - UL}{R_{14}}.$$

Für UL = 0 folgt:

$$\frac{I_{R(UL)}}{I_{R(UH)}} = \frac{U3}{U3 - UH}. \qquad \text{(Gleichung 2)}$$

Folglich wird bei einer Quotientenbildung der Ströme $I_{R(UL)}$ und $I_{R(UH)}$ der Wert des Widerstandes 14 eliminiert.

Unter Berücksichtigung von Gleichung 1 und Gleichung 2 erhält man für die in der Figur 2 dargestellte Vorrichtung folgende Beziehungen:

$$t = \frac{C_{13} \bullet U4}{I_0};$$

$$I_0 \approx I_R;$$

$$t_{UH} = \frac{C_{13} \bullet U_{th}}{I_{R(UH)}};$$

$$t_{UL} = \frac{C_{13} \bullet U_{th}}{I_{R(UL)}}.$$

Daraus folgt:

$$\frac{t_{UH}}{t_{UL}} = \frac{I_{R(UL)}}{I_{R(UH)}} = \frac{U3}{U3 - UH} \qquad \text{(Gleichung 3)}.$$

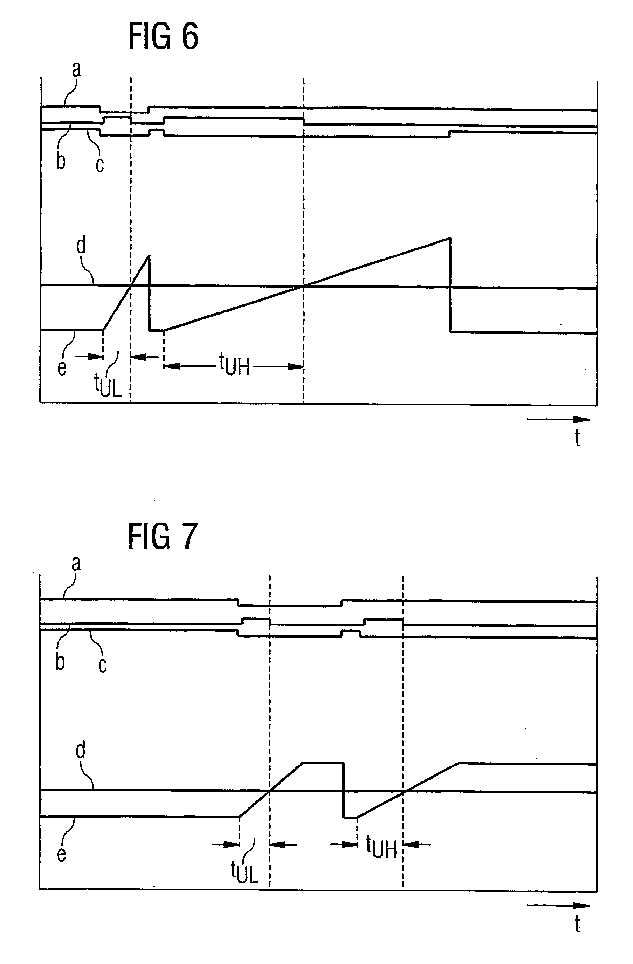

Dabei sind $t_{UH}$ und $t_{UL}$ Ladezeiten des Hilfskondensators 13 im Falle einer Ladung dieses Kondensator mit den Strömen $I_{R(UH)}$ bzw. $I_{R(UL)}$ solange, bis der Spannungsschwellenwert $U_{th}$ am Eingang des EX-OR-Gliedes erreicht ist. Als Eingangsbedingung wurde dabei angenommen, dass der Hilfskondensator 13 über den leitenden Transistor 15 vor dem Beginn eines Messvorganges jeweils vollständig entladen ist, wie dies unten noch im Zusammenhang mit den Figuren 6 und 7 erläutert wird.

Aus der Gleichung 3 ist ersichtlich, dass weder der Kapazitätswert des Hilfskondensators 13 noch der Spannungswert der Schwellenspannung $U_{th}$ einen Einfluss auf diese Gleichung haben. Die Ladezeiten $t_{UH}$ und $t_{UL}$ sind umgekehrt proportional zu den Ladeströmen $I_{R(UH)}$ und $I_{R(UL)}$.

Der nutzbare Anwendungsbereich der Gleichung 3 ist der Bereich von UH << U3 und U3 - UH > 0.

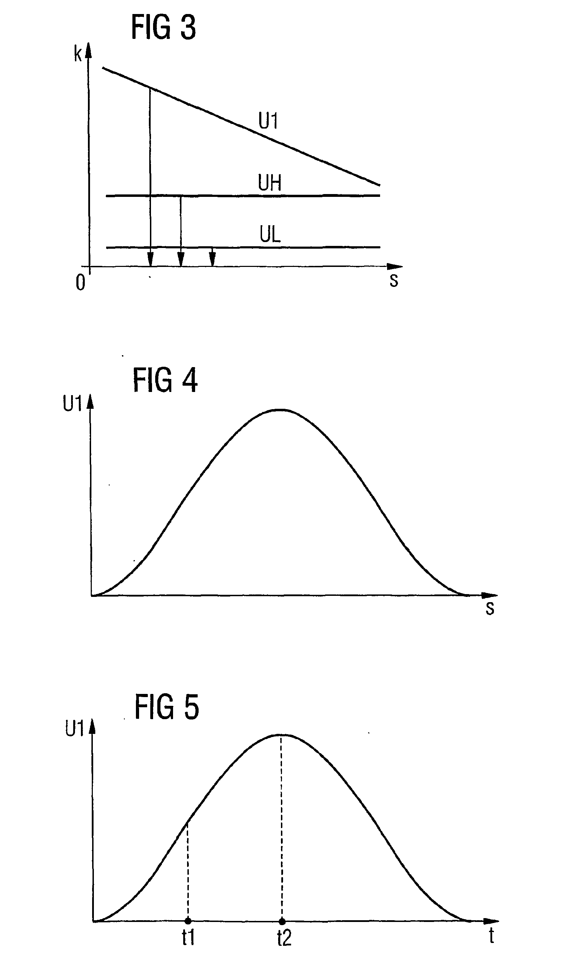

Die Figur 3 zeigt ein Diagramm zur Veranschaulichung verschiedener Spannungen von Figur 2. Längs der Abszisse ist der Abstand S des Schreib-/Lesegerätes 1 vom mobilen Datenträger 4 und längs der Ordinate die induktive Kopplung bzw. der Kopplungsfaktor k aufgetragen. Es ist ersichtlich, dass das LOW-Pegel-Signal UL und das HIGH-Pegel-Signal UH unabhängig vom Abstand S jeweils konstant sind und dass die Spannung U1, die am Kondensator 7 anliegt, mit steigendem Abstand S kleiner wird.

Aus der am Kondensator 7 anliegenden, unstabilisierten Spannung U1 wird durch eine im Schaltungsblock 9 von Figur 1 erfolgende Stabilisierung die Versorgungsspannung des mobilen Datenträgers 4 gewonnen. Es wird angenommen, dass im gering belasteten Zustand folgende Beziehungen gelten:

$$UL \approx 0\ V$$

$$UH \approx U_{CHIP},$$

wobei $U_{CHIP}$ die Versorgungsspannung des mobilen Datenträgers 4 ist.

Die Figur 4 zeigt ein Diagramm zur Veranschaulichung des Spannungsverlaufs der am Kondensator 7 von Figur 2 anliegenden unstabilisierten Spannung U1 in Abhängigkeit vom Abstand zwischen dem Schreib-/Lesegerät 1 und dem mobilen Datenträger 4. Dieser glockenförmige Spannungsverlauf liegt auch vor, wenn der mobile Datenträger 4 bei gleichbleibendem Abstand parallel am Schreib-/Lesegerät 1 vorbeigeführt wird.

Die Figur 5 zeigt ein Diagramm zur Veranschaulichung der Lage zweier Messzeitpunkte bzw. Messzeitintervalle. Wird der mobile Datenträger 4 bei gleichbleibendem Abstand S parallel am Schreib-/Lesegerät 1 vorbeibewegt, dann hat die Spannung U1 am Kondensator 7 den dargestellten zeitlichen Verlauf, welcher glockenförmig ist. Gemäß der Erfindung werden zwei beliebige Messzeitpunkte bzw. Messzeitintervalle festgelegt, wobei der Spannungswert am Messzeitpunkt t1 vergleichsweise klein und am Messzeitpunkt t2 vergleichsweise groß ist. Während der durch die Messzeitpunkte festgelegten Zeitintervalle erfolgt eine Messung des Spannungsverlaufes am Hilfskondensator 13. Wie aus den Figuren 6 und 7 ersichtlich ist, ergeben sich an den Messzeitpunkten unterschiedliche Ladezeiten, aus denen Rückschlüsse auf den Energiezustand des Kondensators 7 des mobilen Datenträgers 4 und damit auch auf die Arbeitsfähigkeit des mobilen Datenträgers 4 gezogen werden können.

Die Figur 6 zeigt ein Diagramm zur Veranschaulichung der gemessenen Ladezeiten bei einer Messung zum ersten Messzeitpunkt t1, zu welchem eine vergleichsweise kleine Spannung U1 am Kondensator 7 anliegt. In der Spur a von Figur 6 ist das am Eingang 20 anliegende Signal UH bzw. UL dargestellt, in der Spur b ein Integrationszeitsignal, in der Spur c das am Eingang 17 anliegende Messzeitsignal, in der Spur d die Schwellenspannung $U_{th}$ und in der Spur e die am Hilfskondensator 13 anliegende Spannung U4.

Das in der Spur a dargestellte Signal UH bzw. UL sowie das in der Spur c dargestellte Messzeitsignal sind von der nicht gezeichneten Logik vorgegeben, in welcher Informationen über den Systemtakt vorliegen. Das Messzeitsignal wird dann gestartet, wenn das in der Spur a gezeigte Signal vom HIGH- in den LOW-Zustand übergeht. Zu diesem Zeitpunkt startet auch das in der Spur b gezeigte Integrationszeitintervall. Wie aus der Spur e hervorgeht, beginnt zu diesem Zeitpunkt auch die Aufladung des Hilfskondensators 13 durch den Ladestrom $I_{0(UL)}$. Der Ladevorgang wird solange fortgesetzt, bis die Spannung am Hilfskondensator 13 die in der Spur d dargestellte Schwellenspannung $U_{th}$ erreicht. Zu diesem Zeitpunkt wird- wie aus der Spur b hervorgeht - die Integrationszeit beendet und als Ladezeit $t_{UL}$ der Auswertelogik 18 zur Verfügung gestellt. Nach diesem Zeitpunkt wird das Messzeitintervall beendet, wie aus der Spur c ersichtlich ist. Unmittelbar nach dem Ende des Messzeitintervalles erfolgt ein Entladen des Hilfskondensators 13 durch den dann leitenden Transistor 15.

Hat das in der Spur a gezeigte HIGH-LOW-Pegel-Signal den HIGH-Pegel und ist der Hilfskondensator 13 entladen, dann wird - wie durch die zweite abfallende Flanke des in der Spur c gezeigten Messzeitsignals hervorgeht - ein zweites Messzeitintervall gestartet. Zu diesem Zeitpunkt beginnt erneut eine Messung der Integrationszeit, wie aus der zweiten ansteigenden Flanke des in der Spur b dargestellten Integrationszeitsignals ersichtlich ist. Ferner beginnt zu diesem Zeitpunkt auch ein Aufladen des Hilfskondensators 13 durch den Ladestrom $I_{0(UH)}$. Der Ladevorgang wird solange fortgesetzt, bis die Spannung am Hilfskondensator 13 die in der Spur d dargestellte Schwellenspannung $U_{th}$ erreicht. Zu diesem Zeitpunkt wird - wie aus der Spur b hervorgeht - die Integrationszeit beendet und als Ladezeit $t_{UH}$ der Auswertelogik 18 zur Verfügung gestellt. Geht nach diesem Zeitpunkt das Messzeitsignal wieder in den HIGH-Zustand über, ist auch dieses Messzeitintervall beendet und es erfolgt ein Entladen des Hilfskondensators 13 über den dann leitenden Transistor 15.

Die Figur 7 zeigt ein Diagramm zur Veranschaulichung der gemessenen Ladezeiten bei einer Messung zum zweiten Messzeitpunkt t2, zu welchem eine vergleichsweise große Spannung U1 am Kondensator 7 anliegt. In der Spur a von Figur 7 ist das am Eingang 20 anliegende Signal UH bzw. UL dargestellt, in der Spur b ein Integrationszeitsignal, in der Spur c das am Eingang 17 anliegende Messzeitsignal, in der Spur d die Schwellenspannung $U_{th}$ und in der Spur e die am Hilfskondensator 13 anliegende Spannung U4.

Das in der Spur a dargestellte Signal UH bzw. UL sowie das in der Spur c dargestellte Messzeitsignal sind von der nichtgezeichneten Logik vorgegeben, in welcher Informationen über den System takt vorliegen. Das Messzeitsignal wird dann gestartet, wenn das in der Spur a gezeigte Signal vom HIGH- in den LOW-Zustand übergeht. Zu diesem Zeitpunkt startet auch das in der Spur b gezeigte Integrationszeitintervall. Wie aus der Spur e hervorgeht, beginnt zu diesem Zeitpunkt auch die Aufladung des Hilfskondensators 13 durch den Ladestrom $I_{0(UL)}$. Der Ladevorgang wird solange fortgesetzt, bis die Spannung am Hilfskondensator 13 die in der Spur d dargestellte Schwellenspannung $U_{th}$ erreicht. Zu diesem Zeitpunkt wird- wie aus der Spur b hervorgeht - die Integrationszeit beendet und als Ladezeit $t_{UL}$ der Auswertelogik 18 zur Verfügung gestellt. Nach diesem Zeitpunkt wird das Messzeitintervall beendet, wie aus der Spur c ersichtlich ist. Unmittelbar nach dem Ende des Messzeitintervalles erfolgt ein Entladen des Hilfskondensators 13 durch den dann leitenden Transistor 15.

Hat das in der Spur a gezeigte HIGH-LOW-Pegel-Signal den HIGH-Pegel und ist der Hilfskondensator 13 entladen, dann wird - wie durch die zweite abfallende Flanke des in der Spur c gezeigten Messzeitsignals hervorgeht - ein zweites Messzeitintervall gestartet. Zu diesem Zeitpunkt beginnt erneut eine Messung der Integrationszeit, wie aus der zweiten ansteigenden Flanke des in der Spur b dargestellten Integrationszeitsignals ersichtlich ist. Ferner beginnt zu diesem Zeitpunkt auch ein Aufladen des Hilfskondensators 13 durch den Ladestrom $I_{0(UH)}$. Der Ladevorgang wird solange fortgesetzt, bis die Spannung am Hilfskondensator 13 die in der Spur d dargestellte Schwellenspannung $U_{th}$ erreicht. Zu diesem Zeitpunkt wird - wie aus der Spur b hervorgeht - die Integrationszeit beendet und als Ladezeit $t_{UH}$ der Auswertelogik 18 zur Verfügung gestellt. Geht nach diesem Zeitpunkt das Messzeitsignal wieder in den HIGH-Zustand über, ist auch dieses Messzeitintervall beendet und es erfolgt ein Entladen des Hilfskondensators 13 über den dann leitenden Transistor 15.

Die Auswertelogik 18 bildet jeweils den Quotienten aus den Ladezeiten $t_{UL}$ und $t_{UH}$ und stellt diesen Quotienten als den Energiezustand des Kondensators 7 beschreibende Größe am Ausgang 19 der Vorrichtung 8 zur Verfügung. Von dort aus wird sie einer Sendeeinheit des mobilen Datenträgers 4 zugeführt und über die Luftübertragungsstrecke 3 an das Schreib-/Lesegerät 1 übertragen. Dort steht sie für eine Anzeige zur Verfügung, anhand welcher ein Benutzer den Energiezustand des Kondensators 7 des mobilen Datenträgers 4 beurteilen und bei Bedarf geeignete Maßnahmen einleiten kann. Alternativ dazu kann die an das Schreib-/Lesegerät 1 übertragene, den Energiezustand des Kondensators 7 beschreibende Größe auch von einer Automatikeinheit im Schreib-/Lesegerät 1 ausgewertet werden, welche bei Bedarf automatisch geeignete Maßnahmen in die Wege leitet.

## Patentansprüche

1. Vorrichtung zur Ermittlung des Energiezustandes eines Energiespeichers eines Datenträgers, in welchem aus einer am Energiespeicher verfügbaren unstabilisierten Gleichspannung eine stabilisierte Gleichspannung zur Versorgung des Datenträgers abgeleitet wird, wobei die Vorrichtung eine an den Energiespeicher angeschlossene Auswerteschaltung aufweist, welche einen Hilfskondensator und eine Messschaltung zur Messung der Ladezeiten des Hilfskondensators enthält, und eine mit dem Ausgang der Messschaltung verbundene Auswertelogik aufweist, die aus gemessenen Ladezeiten des Hilfskondensators eine den Energiezustand des Energiespeichers beschreibende Größe ermittelt,
   **gekennzeichnet duch** einen Spannungsstabilisator zur Stabilisierung der am Energiespeicher (7) verfügbaren unstabilisierten Gleichspannung, und **durch** die Auswerteschaltung (8) mit einem zwischen dem Energiespeicher (7) und der Messschaltung (15, 16, 21) angeordneten Stromspiegel (11, 12), welcher (2) zueinander parallele Pfade aufweist, wobei im ersten dieser Pfade der Hilfskondensator (13), die mit diesem verbundene Messschaltung (15, 16, 21) und die an den Ausgang der Messschaltung (15, 16, 21) angeschlossene Auswertelogik (18) angeordnet ist und wobei im zweiten Pfad ein ohmscher Widerstand (14) vorgesehen ist.

2. Vorrichtung nach Anspruch 1,
   **dadurch gekennzeichnet, dass** die Messschaltung (15, 16, 21) einen Messzeitsignaleingang (17) aufweist, über welchen ihr ein Messzeitsignal zuführbar ist.

3. Vorrichtung nach Anspruch 2,
   **dadurch gekennzeichnet, dass** der Messzeitsignaleingang (17) mit dem Steuereingang eines Transistors (15) der Messschaltung (15, 16, 21) und mit einem Eingang eines EX-OR-Gliedes (16) der Messschaltung (15, 16, 21) verbunden ist, wobei der Transistor (15) im durchgeschalteten Zustand den massefernen Anschluss des Hilfskondensators (13) mit Masse verbindet.

**4.** Vorrichtung nach Anspruch 3,
**dadurch gekennzeichnet, dass** der masseferne Anschluss des Hilfskondensators (13) mit einem zweiten Eingang des EX-OR-Gliedes (16) verbunden ist.

**5.** Vorrichtung nach einem der vorangegangenen Ansprüche,
**dadurch gekennzeichnet, dass** die Messschaltung (15, 16, 21) einen digitalen Signaleingang (20) hat, über welchen ihr ein HIGH- und LOW-Pegelsignal zuführbar sind.

**6.** Vorrichtung nach Anspruch 5,
**dadurch gekennzeichnet, dass** der im zweiten Pfad vorgesehene ohmsche Widerstand (14) zwischen dem digitalen Signaleingang (20) und dem Stromspiegel (11, 12) angeordnet ist.

**7.** Vorrichtung nach Anspruch 5 oder 6,
**dadurch gekennzeichnet, dass** die Messschaltung (15, 16, 21) zur Messung einer ersten und einer zweiten Ladezeit des Hilfskondensators (13) vorgesehen ist, wobei die erste Ladezeit beim Vorliegen eines LOW-Pegelsignals am digitalen Signaleingang (20) und die zweite Ladezeit beim Vorliegen eines HIGH-Pegelsignals am digitalen Signaleingang (20) ermittelt wird.

**8.** Verwendung einer Vorrichtung nach einem der vorangegangenen Ansprüche in einem mobilen Datenträger (4) zum berührungslosen Austausch von Daten mit einer Sende- und Empfangseinrichtung (1), welcher Sendemittel zur Aussendung der den Energiezustand des Energiespeichers (7) beschreibende Größen an die Sende- und Empfangseinrichtung (1) aufweist.

**9.** Verwendung einer Vorrichtung nach einem der vorangegangenen Ansprüche 1 bis 7 in einem Identifikationssystem, welches eine Sende- und Empfangseinrichtung (1) und einen mit dieser über eine berührungslose Übertragungsstrecke (3) verbundenen mobilen Datenträger (4) aufweist, wobei der mobile Datenträger (4) die Vorrichtung sowie Sendemittel zur Aussendung der den Energiezustand des Energiespeichers (7) beschreibenden Größe an die Sende- und Empfangseinrichtung (1) aufweist.

**Claims**

**1.** Device for determining the energy state of an energy storing device of a data carrier, in which a stabilised DC voltage for the supply of the data carrier is derived from an unstabilised DC voltage available at the energy storing device, with the device comprising an evaluation circuit connected to the energy storing device, said evaluation circuit containing an auxiliary capacitor and a measurement circuit for measuring the charging times of the auxiliary capacitor, and having an evaluation logic connected to the output of the measurement circuit, said evaluation logic determining a quantity describing the energy state of the energy storing device from the measured charging times of the auxiliary capacitor
**characterised by**
a voltage stabiliser for stabilising the unstabilised DC voltage available at the energy storing device (7), and by the evaluation circuit (8) with a current mirror (11, 12) arranged between the energy storage device (7) and the measurement circuit (15, 16, 21), said current mirror comprising mutually parallel paths, with the measurement circuit (15,16,21) connected to the auxiliary capacitor, and the evaluation logic (18) connected to the output of the measurement circuit (15,16,21) being arranged in the first of these paths of the auxiliary capacitor (13) and with ohmic resistor (14) being arranged in a second path.

**2.** Device as claimed in claim 1, **characterised in that** the measurement circuit (15,16,21) has a measurement time signal input (17), via which a measurement time signal is supplied to said measurement circuit (15, 16, 21).

**3.** A device as claimed in claim 2, **characterised in that** the measurement time signal input (17) is connected to the control input of a transistor (15) of the measurement circuit (15, 16, 21) and with an input of an XOR gate (16) of the measurement circuit (15,16,21), with the transistor (15) in its conducting state grounding the terminal of the auxiliary capacitor (13) remote from the ground.

**4.** A device as claimed in claim 3, **characterised in that** the terminal of the auxiliary capacitor (13) remote from the ground is connected to a second input of the XOR gate (16).

**5.** A device as claimed in one of the preceding claims, **characterised in that** the measurement circuit (15, 16, 21) has a digital signal input (20) via which a HIGH level signal and a LOW level signal can be supplied to said measurement circuit.

**6.** A device as claimed in claim 5, **characterised in that** the ohmic resistor (14) arranged in the second path is disposed between the digital signal input (20) and the current mirror (11, 12).

**7.** A device as claimed in claim 5 or 6, **characterised in that** the measurement circuit (15, 16, 21) is provided to measure a first and a second charging time of the auxiliary capacitor (13),
with the first charging time being determined when a LOW level signal is present at the digital signal input (20) and the second charging time is determined when a HIGH level signal is present at the digital signal input (20).

**8.** Use of a device as claimed in one of the preceding claims, in a mobile data carrier (4) for the contactless exchange of data with a transceiver (1) comprising transmitting means for sending the quantity describing the energy state of the energy storing device (7) to the transceiver (1).

**9.** Use of a device as claimed in one of the preceding claims 1 to 7 in an identification system, comprising a transceiver (1) and a mobile data carrier(4) connected to the transceiver via a contactless transmission link (3), with the mobile data carrier (4) comprising the device and the transmitting means for sending the quantity describing the energy state of the energy storing device (7) to the transceiver (1).

**Revendications**

**1.** Dispositif pour déterminer l'état énergétique d'un accumulateur d'énergie d'un support de données, dans lequel une tension continue stabilisée pour l'alimentation du support de données est dérivée d'une tension continue non stabilisée disponible dans l'accumulateur d'énergie, le dispositif comportant un circuit d'évaluation, qui est raccordé à l'accumulateur d'énergie et qui contient un condensateur auxiliaire et un circuit de mesure pour la mesure des temps de charge du condensateur auxiliaire, et une logique d'évaluation, qui est reliée à la sortie du circuit de mesure et qui détermine à partir des temps de charge mesurés du condensateur auxiliaire une grandeur décrivant l'état énergétique de l'accumulateur d'énergie,
**caractérisé par** un stabilisateur de tension pour la stabilisation de la tension continue non stabilisée disponible dans l'accumulateur d'énergie (7) et par le circuit d'évaluation (8) avec un miroir de courant (11, 12) placé entre l'accumulateur d'énergie (7) et le circuit de mesure (15, 16, 21), lequel miroir de courant (2) comporte deux trajets parallèles l'un à l'autre, le condensateur auxiliaire (13), le circuit de mesure (15, 16, 21) relié à celui-ci et la logique d'évaluation (18) raccordée à la sortie du circuit de mesure (15, 16, 21) étant placés dans le premier de ces trajets et une résistance ohmique (14) étant prévue dans le deuxième trajet.

**2.** Dispositif selon la revendication 1,
**caractérisé par le fait que** le circuit de mesure (15, 16, 21) comporte une entrée de signal de temps de mesure (17) par l'intermédiaire de laquelle un signal de temps de mesure peut lui être envoyé.

**3.** Dispositif selon la revendication 2,
**caractérisé par le fait que** l'entrée de signal de temps de mesure (17) est reliée à l'entrée de commande d'un transistor (15) du circuit de mesure (15, 16, 21) et à une entrée d'un élément OU-EXCLUSIF (16) du circuit de mesure (15, 16, 21), le transistor (15) à l'état conducteur reliant à la masse celle des bornes du condensateur auxiliaire (13) qui est éloignée de la masse.

**4.** Dispositif selon la revendication 3,
**caractérisé par le fait que** celle des bornes du condensateur auxiliaire (13) qui est éloignée de la masse est reliée à une deuxième entrée de l'élément OU-EXCLUSIF (16).

**5.** Dispositif selon l'une des revendications précédentes,
**caractérisé par le fait que** le circuit de mesure (15, 16, 21) a une entrée de signal numérique (20) par l'intermédiaire de laquelle un signal de niveau HIGH et un signal de niveau LOW peuvent lui être envoyés.

**6.** Dispositif selon la revendication 5,
**caractérisé par le fait que** la résistance ohmique (14) prévue dans le deuxième trajet est placée entre l'entrée de signal numérique (20) et le miroir de courant (11, 12).

**7.** Dispositif selon la revendication 5 ou 6,
**caractérisé par le fait que** le circuit de mesure (15, 16, 21) est prévu pour la mesure d'un premier et d'un deuxième temps de charge du condensateur auxiliaire (13), le premier temps de charge étant déterminé en présence d'un signal de niveau LOW à l'entrée de signal numérique (20) et le deuxième temps de charge étant déterminé en présence d'un signal de niveau HIGH à l'entrée de signal numérique (20).

**8.** Utilisation d'un dispositif selon l'une des revendications précédentes dans un support de données mobile (4) pour l'échange de données sans contact avec un dispositif d'émission et de réception (1), lequel support de données comporte des moyens d'émission pour envoyer les grandeurs décrivant l'état énergétique de l'accumulateur d'énergie (7) au dispositif d'émission et de réception (1).

**9.** Utilisation d'un dispositif selon l'une des revendications précédentes 1 à 7 dans un système d'identification qui comporte un dispositif d'émission et de réception (1) et un support de données mobile (4) relié à celui-ci par l'intermédiaire d'une voie de transmission sans contact (3), le support de données mobile (4) comportant le dispositif ainsi que des moyens d'émission pour envoyer la grandeur décrivant l'état énergétique de l'accumulateur d'énergie (7) au dispositif d'émission et de réception (1).

FIG 1

FIG 2

## FIG 3

## FIG 4

## FIG 5

## FIG 6

## FIG 7